# EUROPEAN PATENT APPLICATION

(11) **EP 3 763 479 A1**
(43) Date of publication of application: **13.01.2021**
(21) Application number: 19764926.2
(22) Date of filing: 08.02.2019
(51) Int. Cl.: B23Q 11/00, B23Q 17/09

(54) **VERTICAL LATHE WITH DAMPED VIBRATION ABSORBER**

(30) Priority: 09.03.2018 ES 201830235
(71) Applicant: Soraluce, S.Coop., 20570 Bergara (Gipuzkoa) (ES)
(72) Inventor: IGLESIAS RAMOS, Alexander, 20570 Bergara Guipúzcoa (ES); CASTAÑO CASTRILLÓN, Jorge Andrés, 20570 Bergara Guipúzcoa (ES); ALDAZABAL IRASUEGUI, Igor, 20570 Bergara Guipúzcoa (ES); MUÑOA GOROSTIDI, Jokin, 20570 Bergara Guipúzcoa (ES)
(74) Representative: Cabinet Beau de Loménie
(86) International application number: PCT/ES2019/070070
(87) International publication number: WO 2019/170938

(57) **Abstract**

A vertical lathe with a damped vibration absorber, comprising a ram (5) which has an accessory (6, 6') on the free end thereof, the ram (5) being movable between a retracted position and an extended position in which vibrations are produced in, at least, two main bending directions (D1, D2) of the ram (5), a movable mass (7,7') which is arranged in the accessory (6,6'), or in the ram (5), guide means (8,8') adapted to guide the movable mass (7,7') in at least one of the main bending directions (D1, D2) of the ram (5), and at least one first pair of elastic stops (9,9') which are arranged in the main bending direction (D1, D2) of the ram (5), between the movable mass (7,7') and the accessory (6,6'), or between the movable mass (7,7') and the ram (5).

## Description

### Technical field

The present invention is related to the suppression, or attenuation, of vibrations which appear during the machining on vertical lathes which have a ram in a vertical arrangement with an accessory which carries the machining tool. The invention proposes a vertical lathe with a vibration absorber which is integrated in the vicinity of the cutting point in order to attenuate the vibrations produced during the machining.

### State of the art

In recent years, the machine tool sector has tended to evolve towards solutions which enable a higher productivity to be achieved, as well as improving the quality of the workpieces obtained and saving on costs. In this sense, the attenuation, or suppression, of the vibrations originating during the machining is particularly relevant.

The mechanical structures of machine tools tend to vibrate during the machining, and vibrations may appear which due to the nature thereof can be detrimental to the surface quality of the machined workpiece and to the integrity of the components of the machine itself, and which, furthermore, can cause premature wear of the tool, or even the breakage thereof.

Machine tools equipped with cantilevered moving elements, such as a ram, have a dynamic response which is strongly variable. The inertia and flexibility of the ram causes the response of the machine to vary depending on the position the ram is in, such that the response of the machine to both static and dynamic forces changes with the working position of the ram. Thus, when the tool interacts with the workpiece during the cutting process, the machine behaves very differently depending on the position of the ram, producing strong variations in the cutting capacity of the machine.

Vertical lathes comprise a table which can be actuated in rotation whereon a workpiece to be machined is available, an accessory carrying a machining tool and a ram having a free end whereon the accessory is arranged. The ram has a vertical arrangement and is arranged in a carriage for the transfer thereof in at least one horizontal direction with respect to the work table, while the ram is movable in a vertical direction with respect to the carriage between a retracted position and an extended position.

Vibrations are produced in vertical lathes when machining. Due to the flexibility of the ram, this element largely determines the amplitude and the predominant vibration mode. Said vibration of the ram can be broken down into two main bending directions, and affects the cutting capacity of the lathe, the vibration being especially relevant when the ram is in the most extended position thereof when the tool is in the position farthest away from the carriage.

Document US6296093, as seen in figure 3, discloses a machine tool with a cantilevered movable element (ram) in a vertical arrangement which enables the aforementioned problem to be solved. The ram incorporates dampers at the end closer to the tool, each one of said dampers being adapted to generate a force in one of the main bending directions of the ram. Although this solution attenuates the vibrations which occur in the ram, it has a series of problems which affect the operation of the machine.

First, this solution forces the use of active dampers which require sensors to measure the signal of the vibration, and actuators to, depending on the measurement, generate damping forces in the main bending directions of the ram.

The use of this type of solution has an impact on the manufacturing cost of the machine and increases the complexity of the system since the force generated by the actuators must be controlled practically in real time, depending on the acquired vibration signal.

Furthermore, in this solution the dampers are arranged outside the ram, each on one of the lateral faces thereof, such that it increases the area of interference around the ram, also increasing the risk of collision with the workpiece or other elements of the machine during the machining.

Therefore, an improved solution is necessary for a vertical lathe provided with a ram in a vertical arrangement which enables the vibrations produced during the machining to be attenuated, mainly when the ram is in the extended position thereof.

### Object of the invention

In accordance with the invention, a vertical lathe with a damped vibration absorber is proposed, which is integrated in the lathe near the cutting point and by means of which the vibrations which occur during the machining are attenuated and the cutting capacity of the lathe is improved.

The vertical lathe according to the invention comprises:
- a table which can be actuated in rotation whereon a workpiece to be machined is available,
- an accessory carrying a machining tool,
- a ram which has a free end whereon the accessory is arranged, the ram being movable between a retracted position and an extended position, such that during the machining vibrations are produced when the ram is in the extended position, said vibrations being produced in at least two main bending directions of the ram,
- a movable mass which is at least partially housed in the accessory carrying the machining tool, or in the ram,
- guide means adapted to guide the movable mass in at least one of the main bending directions of the ram, and
- at least one first pair of elastic stops which are arranged in the main bending direction of the ram, between the movable mass and the accessory, or between the movable mass and the ram.

In this manner, a simple and effective solution is obtained with which the vibrations which are produced in the lathe during the machining are attenuated, especially the vibrations which are produced when the ram is in the most extended position thereof. On the one hand, the proposed solution does not need to use active dampers with sensors in order to detect vibrations, or actuators in order to move the movable mass, and on the other hand, the movable mass is internalised in the accessory carrying the machining tool, or in the ram, without protruding externally, thereby ensuring that there is no interference during the machining with other elements of the lathe or the workpiece to be machined.

Alternatively, the guide means are adapted to guide the movable mass in both main bending directions of the ram, such that the lathe additionally comprises a second pair of elastic stops which are arranged in the other main bending direction of the ram, between the movable mass and the accessory, or between the movable mass and the ram.

Preferably the movable mass has a central arrangement with the longitudinal axis of the movable mass aligned with the longitudinal axis of the accessory, or of the ram, such that the movable mass is centred with respect to the element to be damped, such that a suitable distribution of the oscillating movements of the movable mass is achieved in order to damp the vibrations.

The movable mass comprises a first portion which is partially housed in the accessory and a second portion which is housed inside the accessory. Preferably, the first and second portions of the movable mass are two independent pieces joined together which facilitate the assembly of the movable mass and the integration thereof in the lathe.

The possibility has been envisaged for the first portion of the movable mass to have a cylindrical shape and the second portion having a flat rectangular shape, the cylindrical shape being arranged above the rectangular shape.

Preferably, the movable mass is made of a high-density material in order to reduce the volume thereof since the higher the density, the smaller the size of the movable mass must be. Thus, it has been envisaged that the movable mass is made of tungsten carbide.

Elastic stops are elements which work under compression and preferably have a shape with two flat faces, such as, for example, a flat square or rectangular shape, wherein each elastic stop has one of the flat faces thereof in contact with the accessory, or the ram, and the other flat face thereof in contact with the movable mass. The shape of the flat faces of the elastic stops and the arrangement thereof enable the stops to have a suitable stiffness in the main bending direction of the ram to be damped. In any case, the shape of the elastic stops is not limiting, the stops must be elements which work under compression, wherein the elasticity of the material, the resistant cross section and the thickness thereof are selected based on the stiffness required for the damping.

According to one exemplary embodiment of the invention, the vibration absorber, which is made up of the movable mass, the guide means and the elastic stops, is integrated in the accessory carrying the tool and is configured to act in only one of the main bending directions of the ram.

According to this exemplary embodiment, the guide means comprise a skid joined to the movable mass and a guide whereon the skid slides, which is aligned with the main bending direction of the ram.

In this exemplary embodiment, the accessory carrying the tool has first openings which provide access to the inside of the accessory wherein the movable mass is arranged and which are closed by first covers.

According to another exemplary embodiment of the invention, the damped absorber, which is made up of the movable mass, the guide means and the elastic stops, is integrated in the accessory carrying the tool and is configured to act in both of the main bending directions of the ram.

According to this other exemplary embodiment, the guide means are bearings which are arranged between the movable mass and internal walls of the accessory carrying the tool.

In this other exemplary embodiment, the first pair of elastic stops are arranged in one of the two main bending directions of the ram, between the movable mass and the accessory, and the second pair of elastic stops are arranged in the other main bending direction of the ram, between the movable mass and the accessory.

In this other exemplary embodiment, the accessory carrying the tool has the first openings which provide access to the inside of the accessory wherein the movable mass is arranged and which are closed by the first covers and second openings which also provide access to the inside of the accessory wherein the movable mass is arranged and which are closed by second covers.

In this manner, a simple and effective solution is obtained for arranging a damped absorber in a vertical lathe which enables the vibrations which appear during the machining when the ram is in the extended position to be attenuated.

### Description of the figures

Figure 1 shows a perspective view of a vertical lathe according to the invention.
Figure 2 shows a schematic representation of one of the main directions wherein the ram of the vertical lathe bends.
Figure 3 shows another schematic representation of the other main direction wherein the ram of the vertical lathe bends.
Figure 4 shows a first exemplary embodiment of an accessory which incorporates a movable mass guided in one of the main bending directions of the ram.
Figure 5 shows a second exemplary embodiment of an accessory which incorporates a movable mass which can oscillate in both main bending directions of the ram.
Figure 6 shows an exploded view of the elements making up the accessory carrying the machining tool according to the first exemplary embodiment of figure 4.
Figure 7 shows a cross-sectional view of the accessory of figure 4.
Figure 8 shows another cross-sectional view of the accessory of figure 4.
Figure 9 shows an exploded view of the elements making up the accessory carrying the machining tool according to the second exemplary embodiment of figure 5.
Figure 10 shows a cross-sectional view of the accessory of figure 5.

### Detailed description of the invention

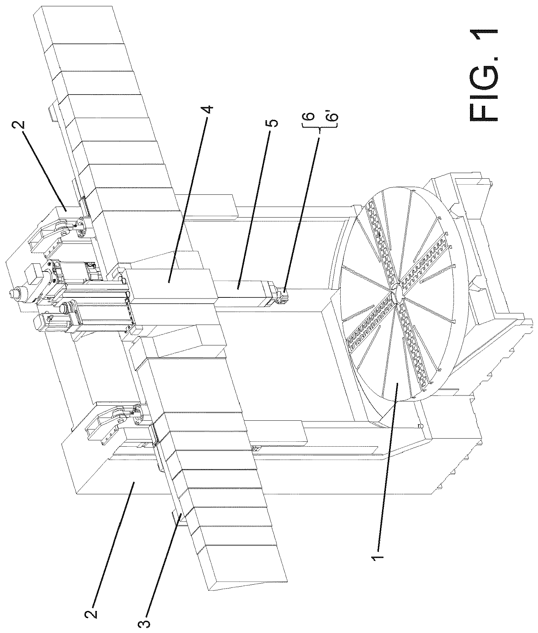

Figure 1 shows an exemplary embodiment of a vertical lathe according to the invention. The lathe comprises a table (1) whereon the workpiece to be machined is arranged, columns (2) between which a beam (3) is arranged, a carriage (4) which is arranged in the beam (3), a ram (5) which is arranged in the carriage (4), and an accessory (6) carrying a machining tool which is arranged on a free end of the ram (5).

The table (1) can be actuated in rotation in order to produce a revolving movement in the workpiece, the beam (3) can be fixed to the columns (2) or it can move vertically on the columns (2), the carriage (4) is horizontally movable on the beam (3), and the ram (5) is vertically movable with respect to the carriage (4) between a retracted position and an extended position.

The ram (5) is an element with a prismatic configuration which is in a cantilevered vertical arrangement, and for this reason, due to the inertia and flexibility thereof, it is the portion of the vertical lathe which has the most influence on the dynamic response thereof.

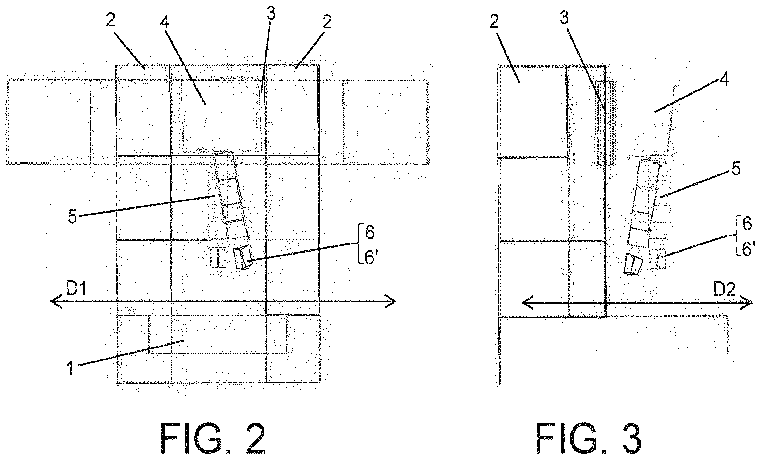

Experimentally, it has been verified that the critical vibration modes of the ram (5) during the machining correspond to the bending modes thereof, such that given the prismatic configuration thereof, the ram (5) tends to oscillate mainly in two directions (D1, D2) respectively represented in schematic figures 2 and 3. Therefore, in order to damp the vibrations which occur in the ram (5), it is especially relevant to generate damping forces which are aligned with the main bending directions (D1, D2) wherein the ram (5) oscillates.

As seen in figures 2 and 3, the first bending direction (D1) wherein the ram (5) oscillates is a direction parallel to the longitudinal cross section of the beam (3) and the second bending direction (D2) wherein the ram oscillates is a direction orthogonal to the first bending direction (D1) and therefore perpendicular to the longitudinal cross section of the beam (3), although as indicated above, said directions (D1, D2) depend on the bending modes of the ram (5) and therefore on the prismatic configuration thereof and not on the arrangement thereof with respect to other portions of the lathe.

In order to damp these vibrations, the invention proposes using a damped absorber which is guided in at least one of the main bending directions (D1, D2) of the ram (5).

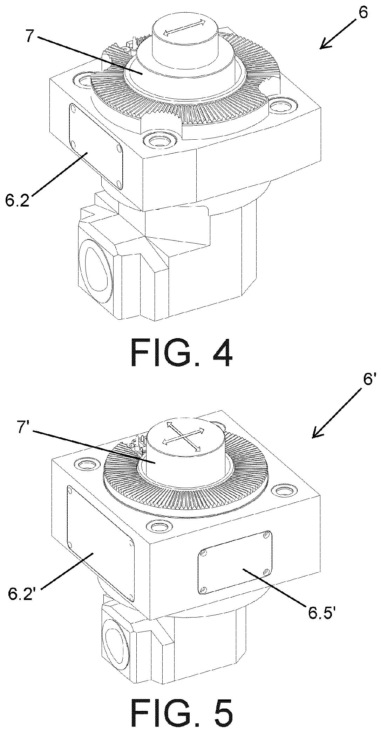

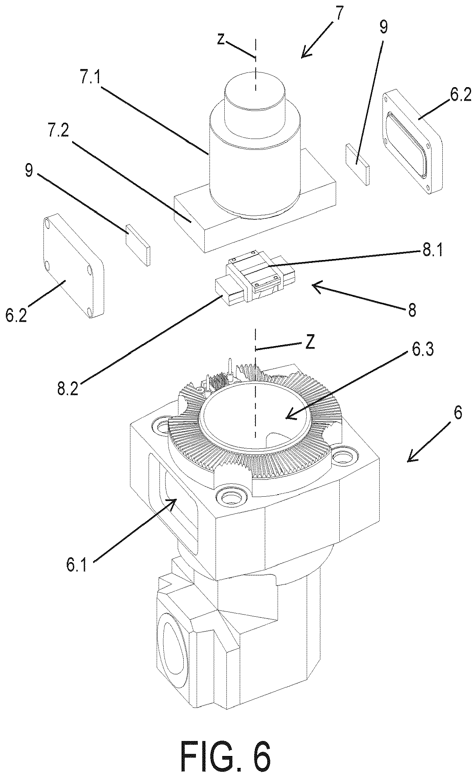

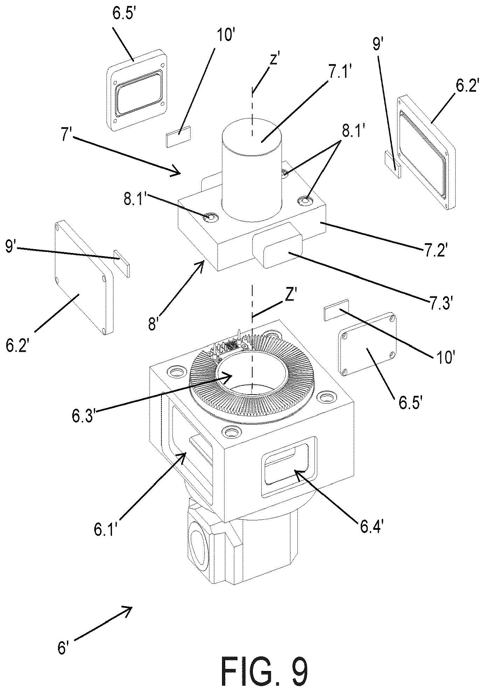

In order to guarantee a correct dissipation of the vibrations, the damped absorber is arranged in the vicinity of the cutting point, which coincides with the point wherein the amplitude of the vibration is the greatest. Thus, according to the invention, the damped absorber can be arranged inside the accessory (6,6') which carries the machining tool, as illustrated in the exemplary embodiments of figures 4 to 10, or it can be arranged on the free end of the ram (5) whereon the accessory (6,6') is located, either inside the ram (5) or inside an extension of the ram (5) which is coupled to the accessory (6,6'). This arrangement is especially relevant, since the farther the damped absorber is from the cutting point, the greater the force that must be generated in order to damp the vibrations, and therefore the larger the absorber and the space required to integrate it into the lathe.

The damped absorber consists of a movable mass (7,7') which is suspended from the structure to be damped and joined to it by means of a damped flexible joint (9,9', 10'), wherein the natural frequency of the absorber is calibrated to coincide with the natural frequency of the structure to be damped.

The accessory (6,6') comprises an upper portion wherein the damped absorber is integrated, and a lower portion wherein the machining tool attachment system is located. The accessory (6,6') has an angled configuration wherein the actuation axis (x) of the machining tool is perpendicular to the longitudinal axis (Z) of the accessory (6,6').

The first exemplary embodiment of figures 4, 6, 7 and 8 shows an accessory (6) with an integrated damped absorber which is adapted to attenuate the vibrations occurring in one of the main bending directions (D1, D2) of the ram (5).

The accessory (6) has guide means (8) to guide the movable mass (7) in one of the main bending directions (D1, D2) of the ram (5) and a damped flexible joint formed by a first pair of elastic stops (9).

Preferably, the guide means (8) comprise a skid (8.1) which is joined to the movable mass (7) and a guide (8.2) whereon the skid (8.1) slides, which is integrally joined to an internal wall of the accessory (6), the guide (8.2) being aligned with the main bending direction (D1) of the ram (5) to be damped.

The movable mass (7) comprises a first portion (7.1) which is partially housed in the accessory (6) and a second portion (7.2) is housed in the accessory (6).

Preferably, the movable mass (7) has a longitudinal axis (z) which is aligned with the longitudinal axis (Z) of the accessory (6), it being, in this type of vertical lathe, generally said longitudinal axis (Z) of the accessory (6) which is coaxial with the longitudinal axis (not shown) of the ram (5), such that the movable mass (7) is centred in the accessory (6) for a suitable attenuation of the vibrations.

The accessory (6) has first openings (6.1) which provide access to the inside thereof wherein the second portion (7.2) of the movable mass (7) is housed, the accessory (6) having first covers (6.2) for the closure of the first openings (6.1).

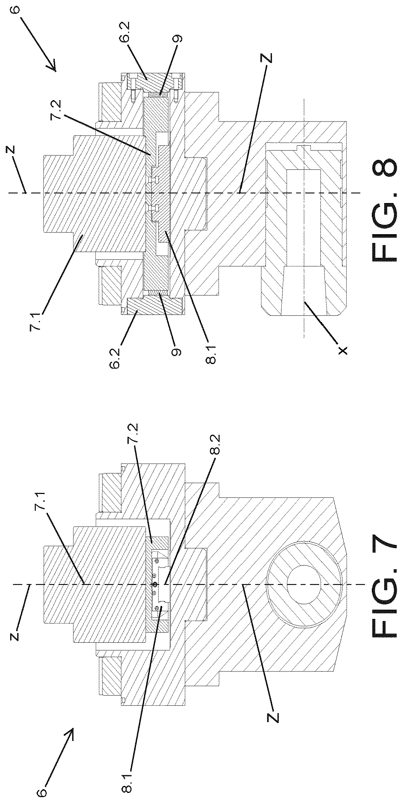

With this arrangement, as seen in the cross-sectional view of figure 8, each of the elastic stops (9) of the first pair is arranged between one of the first covers (6.2) of the accessory (6) and one end of the second portion (7.2) of the movable mass (7). Thus, the elastic stops (9) are slightly compressed between the covers (6.2) and the movable mass (7), the compression of the elastic stops (9) being able to be regulated by adjusting the arrangement of the covers (6.2) in the openings (6.1) of the accessory (6).

Preferably, the elastic stops (9) have a shape with two flat faces, such as, for example, a flat rectangular or square shape, one of the flat faces thereof being in contact with one of the first covers (6.2) of the accessory (6) and the other of the flat faces thereof in contact with one end of the second portion (7.2) of the movable mass (7). With this configuration, the elastic stops (9) have a suitable stiffness in order to work under compression in the main bending direction (D1) of the ram (5) to be damped, while under sheering stress, the elastic stops (9) have less stiffness. Furthermore, the elastic stops (9) enable abrupt shocks to not be produced when the movable mass (7) reaches the limit of the path thereof and reverses the oscillation direction thereof.

Preferably, the first portion (7.1) and second portion (7.2) of the movable mass (7) are two independent pieces which facilitate the assembly of the movable mass (7) in the accessory (6) carrying the machining tool. For example, for the assembly of the movable mass (7) in the accessory (6), the first portion (7.1) is introduced through an upper opening (6.3) of the accessory (6) and the second portion (7.2) is introduced through one of the first openings (6.1).

Preferably, the first portion (7.1) of the movable mass (7) has a cylindrical shape with a configuration reciprocal to the upper opening (6.3), but with a diameter smaller than the diameter of said upper opening (6.3), such that the oscillation of the movable mass (7) is enabled, while the second portion (7.2) of the movable mass (7) has a flat rectangular shape in order to favour the movement thereof on the guide (8.2).

With all this, when the ram (5) is in the extended position wherein the tool of the accessory (6) machines the workpiece, vibrations start to be produced in the ram (5), such that the movable mass (7) starts to oscillate on the guide (8.2) attenuating said vibrations.

In this arrangement, the first pair of stops (9) secure the movable mass (7) elastically and without clearance, such that the assembly behaves like a system which is suspended elastically with one degree of freedom. The stiffness of the elastic stops determines the natural oscillation frequency of the movable mass, while moreover said oscillation is damped due to the damping of the elastic stops, which limits the amplitude of the oscillation. Selecting the stiffness of the elastic stops modifies (calibrates) the oscillation frequency of the movable mass until it coincides with the frequency of the critical vibration mode of the ram to be damped. By arranging the absorber in the element to be damped, and after calibrating the absorber frequency according to the frequency of the critical bending mode of the ram to be suppressed, a damping effect is produced which reduces the oscillation amplitude of the ram (5).

In the second exemplary embodiment of figures 5, 9 and 10, another accessory (6) with another integrated damped absorber is shown, which is adapted to attenuate the vibrations occurring in both main bending directions (D1, D2) of the ram (5).

As clearly seen in light of the figures, the accessory (6') of the second embodiment is identical to the accessory (6) of the first exemplary embodiment except for when it relates to guide means (8) of the movable mass (7), for which reason all the advantages and features described above for the first exemplary embodiment are applicable to the second exemplary embodiment of the invention.

Thus, the accessory (6') of the second exemplary embodiment has guide means (8') to guide the movable mass (7') in both main bending directions (D1, D2) of the ram (5) and a damped flexible joint formed by a first pair of elastic stops (9') which are arranged in one of the main bending directions (D1) of the ram (5), and by a second pair of elastic stops (10') which are arranged in the other main bending direction (D2) of the ram (5).

The guide means (8') of the accessory (6') of the second exemplary embodiment are bearings (8.1') which enable a free oscillation of the movable mass (7') inside the accessory (6'), wherein the first and second pair of elastic stops (9', 10') work respectively in one of the main bending directions (D1, D2) of the ram (5).

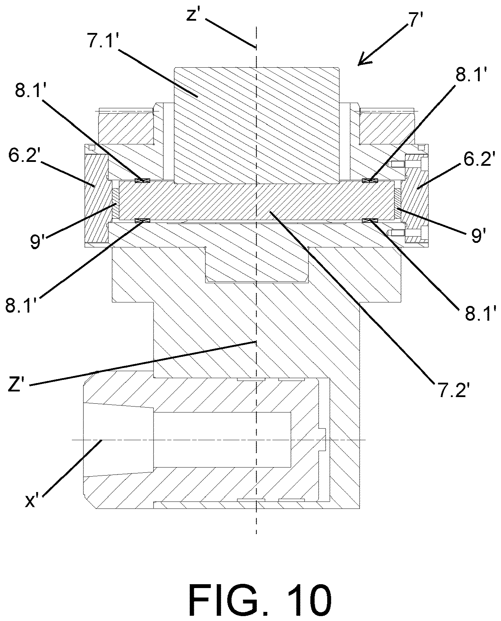

The bearings (8.1') are ball bearings and are arranged in the upper and lower portions of the second portion (7.2') of the movable mass (7'), such that, as shown in the cross-sectional view of figure 10, said bearings (8.1') are arranged between the movable mass (7') and internal upper and lower walls of the accessory (6').

In this second exemplary embodiment, the accessory (6') has first (6.1') and second openings (6.4') which provide access to the inside thereof wherein the second portion (7.2') of the movable mass (7') is housed, the accessory (6') having first (6.2') and second covers (6.5') for the closure of the openings (6.1', 6.4').

Likewise, in this second exemplary embodiment, the second portion (7.2') of the movable mass (7') has extensions (7.3'), such that each of the elastic stops (9') of the first pair is arranged between one of the first covers (6.2') of the accessory (6') and the ends of the second portion (7.2') of the movable mass (7), and each of the elastic stops (10') of the second pair are arranged between one of the second covers (6.5') of the accessory (6') and one of the extensions (7.3') of the movable mass (7').

As indicated above, the elastic stops (9', 10') have a suitable stiffness when working under compression but a low stiffness when working under shearing stress, in this manner when the first pair of elastic stops (9') is working in one of the main bending directions (D1) of the ram (5), the second pair of elastic stops (10') is working under sheering stress, having a low stiffness against the bending direction (D1) which is being damped and therefore without interfering with the work performed by the first pair of elastic stops (9'), resulting in the same behaviour when it is the second pair of elastic stops (10') which is working in the other main oscillation direction (D2).

It has been envisaged that the movable mass (7,7') of the accessory (6,6') is made of a high-density material, such as tungsten carbide, such that a high inertia force is obtained, occupying as little space as possible.

## Claims

1. A vertical lathe with a damped vibration absorber, comprising:
• a table (1) which can be actuated in rotation whereon a workpiece to be machined is available,
• an accessory (6, 6') carrying a machining tool,
• a ram (5) which has a free end whereon the accessory (6, 6') is arranged, the ram (5) being movable between a retracted position and an extended position, such that during the machining vibrations are produced when the ram (5) is in the extended position, said vibrations being produced in at least two main bending directions (D1, D2) of the ram (5),
**characterised in that** the lathe additionally comprises:
• a movable mass (7,7') which is at least partially housed in the accessory (6,6') carrying the machining tool, or in the ram (5),
• guide means (8,8') adapted to guide the movable mass (7,7') in at least one of the main bending directions (D1,D2) of the ram (5), and
• at least one first pair of elastic stops (9,9') which are arranged in the main bending direction (D1) of the ram (5), between the movable mass (7,7') and the accessory (6,6'), or between the movable mass (7,7') and the ram (5).

2. The vertical lathe with a damped vibration absorber, according to the preceding claim, **characterised in that** the movable mass (7,7') has a central arrangement with the longitudinal axis (z,z') thereof aligned with the longitudinal axis (Z, Z') of the accessory (6,6'), or of the ram (5).

3. The vertical lathe with a damped vibration absorber, according to any one of the preceding claims, **characterised in that** the movable mass (7,7') comprises a first portion (7.1, 7.1') which is partially housed in the accessory (6,6') and a second portion (7.2, 7.2') is housed inside the accessory (6,6').

4. The vertical lathe with a damped vibration absorber, according to the preceding claim, **characterised in that** the first (7.1) and second portions (7.2) of the movable mass (7) are two independent pieces joined together.

5. The vertical lathe with a damped vibration absorber, according to claim 3 or 4, **characterised in that** the first portion (7.1, 7.1') of the movable mass (7,7') has a cylindrical shape and the second portion (7.2, 7.2') has a flat rectangular shape.

6. The vertical lathe with a damped vibration absorber, according to any one of the preceding claims, **characterised in that** the accessory (6,6') has first openings (6.1, 6.1') which provide access to the inside of the accessory (6,6') wherein the movable mass (7,7') is arranged and which are closed by first covers (6.2, 6.2').

7. The vertical lathe with a damped vibration absorber, according to any one of the preceding claims, **characterised in that** the movable mass (7,7') is made of tungsten carbide.

8. The vertical lathe with a damped vibration absorber, according to any one of the preceding claims, **characterised in that** the guide means (8) comprise a skid (8.1) joined to the movable mass (7) and a guide (8.2) whereon the skid (8.1) slides which is aligned with the main bending direction (D1) of the ram (5).

9. The vertical lathe with a damped vibration absorber, according to any one of claims 1 to 7, **characterised in that** the guide means (8') are adapted to guide the movable mass (7') in both main bending directions (D1, D2) of the ram (5), and wherein the lathe additionally comprises a second pair of elastic stops (10') which are arranged in the other main bending direction (D2) of the ram (5), between the movable mass (7') and the accessory (6'), or between the movable mass (7') and the ram (5).

10. The vertical lathe with a damped vibration absorber, according to the preceding claim, **characterised in that** the guide means (8') are bearings (8.1') which are arranged between the movable mass (7') and internal walls of the accessory (6').

11. The vertical lathe with a damped vibration absorber, according to claim 9 or 10, **characterised in that** the accessory (6') additionally has second openings (6.4') which provide access to the inside of the accessory (6') wherein the movable mass (7') is arranged and which are closed by second covers (6.5').

12. The vertical lathe with a damped vibration absorber, according to any one of the preceding claims, **characterised in that** the elastic stops (9,9', 10') have a shape with two flat faces, wherein each elastic stop (9,9', 10') has one of the flat faces thereof in contact with the accessory (6,6'), or the ram (5), and the other flat face thereof in contact with the movable mass (7,7').
